(19) Europäisches Patentamt
European Patent Office
Office européen des brevets

(11) Publication number: **0 189 978**
**A1**

(12) **EUROPEAN PATENT APPLICATION**

(21) Application number: 86300148.3

(51) Int. Cl.⁴: **C09D 3/48**, C08F 8/00

(22) Date of filing: 10.01.86

(30) Priority: 10.01.85 US 690192

(43) Date of publication of application: 06.08.86 Bulletin 86/32

(84) Designated Contracting States: BE CH DE FR GB IT LI LU NL SE

(71) Applicant: United Merchants and Manufacturers, Inc.
1407 Broadway
New York, N.Y. 10018(US)

(72) Inventor: Faircloth, George Eddie
Route 1, Box 159
Keysville, Georgia 30816(US)

(74) Representative: Allard, Susan Joyce et al
BOULT, WADE & TENNANT 27 Furnival street
London EC4A 1PQ(GB)

(54) **Aqueous based release coating compositions.**

(57) An aqueous based release coating composition for pressure sensitive adhesives comprising an emulsion copolymer or interpolymer and a release agent which is capable of reacting with the functional group of the emulsion polymer to form amine-acid or other bonding interaction utilizing an amine or acid functionality such that migration of the release agent from the coating to a subsequently applied adhesive is prevented.



Rank Xerox

# AQUEOUS BASED RELEASE COATING COMPOSITIONS

There is continuing interest in developing release coating compositions for pressure sensitive adhesives which provide for the controlled release during unwinding of pressure sensitive adhesive coated tapes and for the easy peeling of cover sheets from labels and similar material. In this way, the adhesive coating can be left intact without destroying the strength of the adhesive in its eventual application.

Conventional release coating compositions usually consist of a solvent, a binder, a release agent and sometimes one or more additives. Due to the presence of usually unhealthful organic solvents, these compositions are environmentally undesirable and in any event, are increasingly expensive due to the spiraling cost of petroleum based products over recent years. Moreover, conventional release agents are not chemically bound in any way and therefore can migrate and contaminate the adhesive surface thereby adversely affecting the tack and adhesion properties of the adhesive.

Later, release coating compositions were developed containing release agents which bind to the binder molecule of the release coating composition. These compositions are prepared by copolymerizing a molecule possessing release properties into base polymers so that the release molecules can not transfer from the release coating to the adhesive surface and destroy the tack of the adhesive. Typically, ethylenically unsaturated monomers such as vinyl acetate, ethyl acrylate or acrylonitrile are copolymerized with compounds such as stearyl methacrylate or similar acrylic esters based on fatty alcohols. Alternatively, polyvinyl alcohols are reacted with long chain isocyanates such as stearyl isocyanate wherein the pendant stearyl groups provide release properties. While these compositions attempted to solve the migration problem of the release agent, it is evident that the release molecules are still distributed throughout the coating rather than desirably being concentrated at the surface of the coating. Moreover, these compositions retained the disadvantages of organic solvents, which are necessary in systems of this type due to the difficulty of copolymerizing hydrophobic monomers such as stearyl methacrylate in emulsion polymerization.

Recent discoveries have demonstrated the development of aqueous based release compositions in the form of acrylic ester or acrylic ester/vinyl acetate copolymers in emulsion form, with release agents such as silicones and/or fatty acid derivatives incorporated into the emulsion. However, such compositions demonstrate the migration of the release agent from the release coating to the adhesive surface thereby adversely affecting the tack and adhesion properties of the adhesive.

U.S. Patent No. 3,933,702 discloses a release coating composition generally making use of silicone containing compounds as the release agent. Silicone compounds are known to migrate due to their lack of binding ability with other compounds in the composition. Moreover, silicone compounds tend to be quite expensive.

U.S. Patent No. 4,386,183 discloses a release coating composition for strippable substrates in contact with pressure sensitive adhesives. The composition comprises polyvinyl alcohol, a migratable release promoting agent, a water soluble salt of a coordinating metal and a water soluble boron compound in an aqueous solution.

U.S. Patent No. 3,386,982 discloses a plastic composition of an alkoxylated polyvinyl alcohol with a modifying agent that is an alkoxylated higher fatty acid amine.

U.S. Patent No. 4,342,815 discloses a pressure sensitive adhesive tape having a release coating which comprises a novel acrylate terpolymer as a release polymer, a base such as an amine, a wetting agent such as acetone and a water-soluble thickening agent such as sodium carboxymethyl-cellulose. The release polymer is obtained by the polymerization of a higher alkyl acrylate ester monomer, a carboxyl supplying monomer and an acrylate derived hardening monomer.

U.S. Patent No. 4,241,198 discloses a releasing agent containing (A) a copolymer produced by the polymerization of stearyl acrylate and/or stearyl methacrylate and acrylonitrile and an ethylenically unsaturated compound having functional groups reactive with metal alcoholate, and (B) a metal alcoholate.

Nevertheless, there remains a need for an inexpensive aqueous based release coating composition utilizing a release agent which will effectively bind to another component of the composition thereby preventing the migration of the release agent.

We have now developed water based release coating compositions which are free from organic solvents and which prevent the migration of release agents, and which permit a controlled release during the unwinding of pressure sensitive adhesive coated tapes and the easy peeling of cover sheets from labels and similar materials.

These and other objects are achieved through the provision of aqueous based release coating compositions for pressure sensitive adhesives which are composed of an emulsion copolymer or interpolymer of a copolymerizable monomer with a functional reactive group and a non-functional copolymerizable monomer and a release agent which is capable of reacting and bonding with the functional reactive group of the emulsion copolymer or interpolymer such that migration of the release agent is prevented. Generally, the compositions of the invention contain an amine functionality which binds with an acid portion thereof, and in all embodiments, there is contained an acid and/or amine functional group capable of bonding with another component of the composition.

In a preferred embodiment, the emulsion copolymer or interpolymer should contain from .2-20% by weight of acid monomers derived from alpha-unsaturated mono-or dicarboxylic acids acids or sulfonated derivatives of vinyl containing molecules and 80-99.8% by weight of a non-functional copolymerizable monomer. The release agent preferably should be present in the compositions of the invention in an amount not to exceed the equivalent weight of the acid monomer in the emulsion polymer. Exemplary release agents are fatty amines and diamines, amine functional silicones, blocked isocyanates and polydimethyl siloxane polymers.

In accordance with the invention, a release coating composition is provided which permits the controlled unwinding of pressure sensitive adhesive coated tapes and facilitates the peeling of cover sheets from labels and similar materials. The release coating composition of the present invention is made up of two basic elements: an emulsion copolymer or interpolymer and a release agent which is capable of reacting with the carboxyl or amine functional group contained in the emulsion copolymer or interpolymer. In most embodiments of the invention, the compositions of the invention contain an amine functionality which is reactive with an acid portion thereof, and which can be contained in either the emulsion copolymer or the release agent as can the acid portion, provided the amine-acid bonding

interaction can occur in the composition. It is preferred that the acid component of the composition be contained in the emulsion polymer and the reactive amine functionality in the release agent.

In the preferred embodiment, the emulsion copolymer preferably contains from .2 - 20% by weight of copolymerizable acid monomers derived from alpha--unsaturated mono-or dicarboxylic acids. Monocarboxylic acids such as acrylic acid, methacrylic acid, vinyl benzoic acid and 2-butenoic acid and dicarboxylic acids such as maleic acid, fumaric acid, and itaconic acid are exemplary. Any combination of these carboxylic acids is suitable for use in the invention in the same manner any solitary acid is used. Also operable in the compositions of the invention as the acid monomer are sulfonated derivatives of vinyl containing molecules such as vinylbenzene sulfonic acid and 2--acrylamido-2-methylpropane sulfonic acid.

Comprising the remaining 80-99.8% of the emulsion polymer are non-functional copolymerizable monomers capable of copolymerizing with the copolymerizable acid monomer containing an acid functional group such as vinyl acetate, vinyl chloride, vinylidene chloride, styrene and alkyl acrylates wherein the alkyl group contains from 2 to 10 carbon atoms, or any mixture of the above.

The acid monomers capable of copolymerizing with the non-functional copolymerizable monomers to form the emulsion polymer is ideally chosen from one of the following groups:

a) 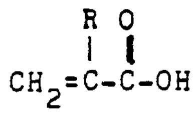 wherein R is hydrogen or a lower alkyl group of $C_nH_{2n+1}$ and n is an integer from 1 to 4

b) 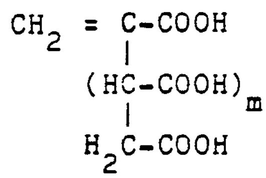

wherein m is an integer from 0 to 2.

c) 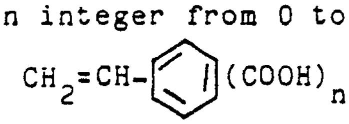 wherein n is an integer from 1 to 3.

d) 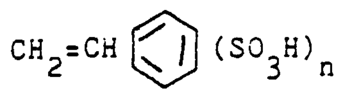 wherein n is an integer from 1 to 3.

e) $CH_2=CHSO_3H$

f) 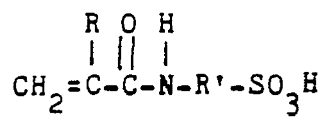 wherein R is hydrogen or a lower alkyl group of $C_nH_{2n+1}$, n is an integer from 1 to 4 and R' is an alkylene group.

In a most preferred embodiment, the emulsion polymer is the polymerization product of vinyl acetate and .5-5% by weight of an acid monomer chosen from the group of acrylic acid, methacrylic acid, maleic acid, fumaric acid and itaconic acid.

The emulsion copolymer or interpolymer should be capable of forming a film when dried. Preferably, the emulsion copolymer or interpolymer will have a Tg°C in the range of 0°C - 60°C.

The second basic element required for the preparation of the release coating compositions of the invention is a release agent. In the preferred embodiment, it contains an amine functionality which is capable of reacting with the acid functional group which makes up the acid monomer portion of the emulsion copolymer or interpolymer. Suitable release agents of this nature include fatty amines of the formula $C_n H_{2n+1}NR_2$ or $C_nH_{2n-1}NR_2$ wherein n is an integer from 8 to 20 and R is a lower alkyl, hydrogen or -$(CH_2\text{-}\underset{R}{C}HO)_pH$ where p is an integer from 1 to 15 and R is hydrogen or a methyl group. Other suitable release agents include fatty diamines of the formula

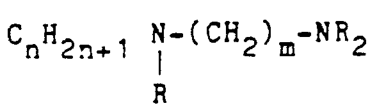 or 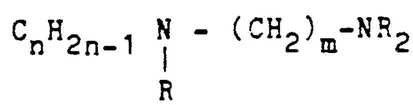

wherein n is an integer from 10 to 20, m is 2 or 3 and R is hydrogen, a lower alkyl, or a polyalkoxy of the formula -$(CH_2RCHO)_qH$ where R' is hydrogen or methyl, and q is an integer from 1 to 15. The fatty amines and diamines are preferred in the release compositions of the invention when used in conjunction with the carboxylated emulsion copolymers or interpolymers.

Other suitable release agents include amine-functional silicones, amine terminated polydimethyl siloxane polymers and compounds such as blocked isocyanates, which generate amine functionality from a precursor compound.

Amino-functional silicones such as DC-108 and Q2--7227, manufactured by the Dow Corning Corporation, are described as nonionic emulsions of an amino-functional silicone polymer, with the structure:

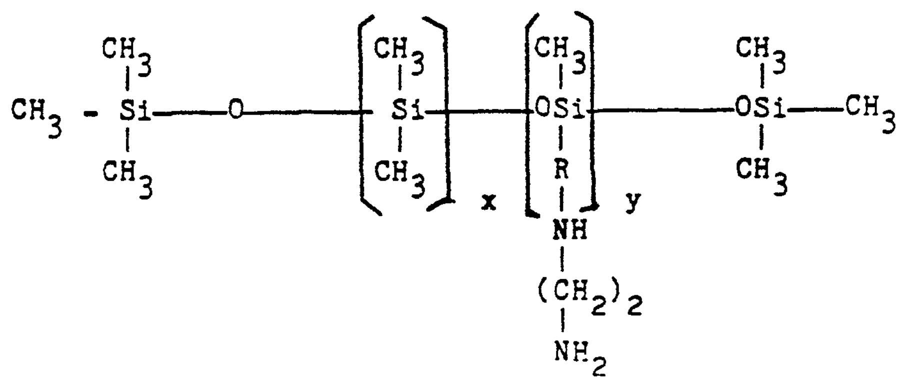

wherein x and y are integers. The polydimethyl siloxane polymers, possessing amine functionality, are of the formula

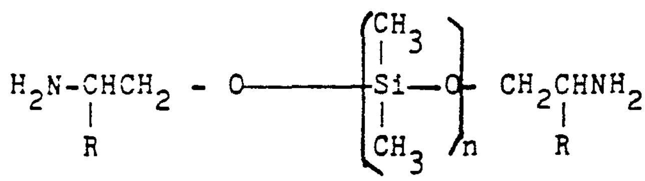

wherein R is hydrogen or a lower alkyl group and n is an integer from about 10 to 100. The blocked isocyanates are of the formula

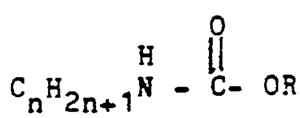

wherein the product is derived from a fatty isocyanate -$(C_nH_{2n+1}NCO)$and a blocking agent ROH, such as a phenol or a ketoxime and n is an integer from about 10 to 20.

Also suitable for use as a release agent are the fatty epoxides of the formula

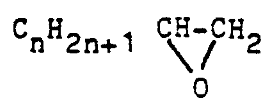

where n is an integer from 8 to 18. Due to shelf life problems, the fatty epoxides should be added to the emulsion copolymer or interpolymer just prior to use. When a fatty epoxide is used as the release agent in the release coating compositions of the invention, there is contained in the emulsion copolymer or interpolymer either an acid or an amine functionality. In this embodiment of the invention, there is not created an amine-acid interaction but an amine or an acid is necessary to react with the fatty epoxide in order to obtain the properties of the invention. The reaction of the fatty epoxides as a release agent with the emulsion copolymer or interpolymer containing an amine or acid functionality is exemplified as follows:

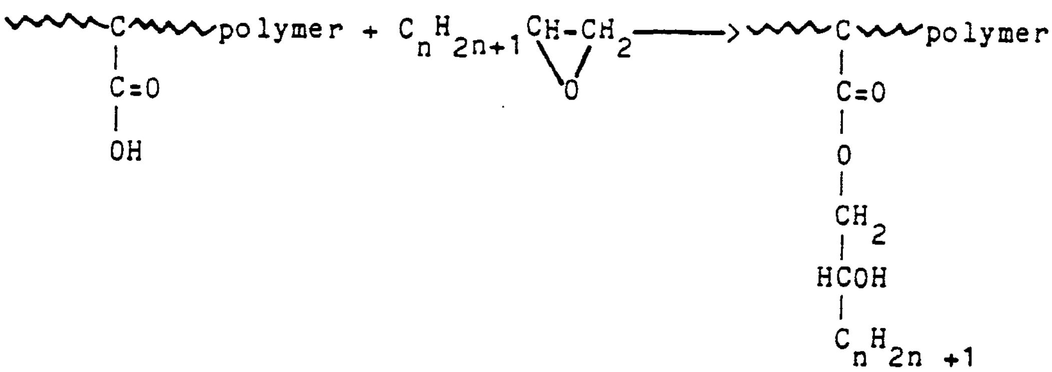

and

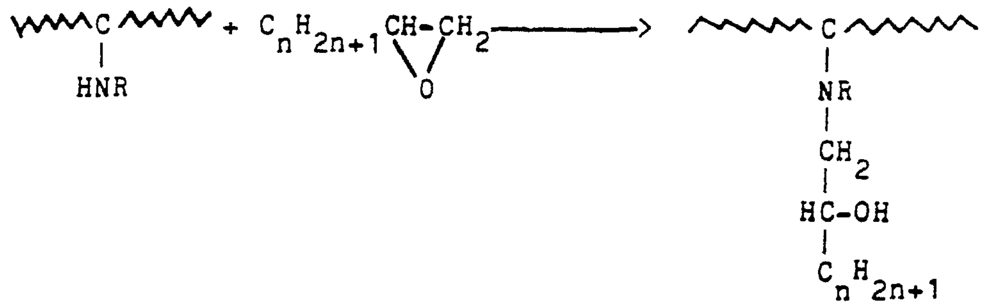

The release agent of the invention should be readily water dispersible as the compositions of the invention are aqueous based. In this regard, dispersants may be used to aid in the dispersion of the release agent but should be used with caution since the dispersants can migrate to the surface of the coating and affect the releasing as well as adhesive properties.

The preferred method for preparing the release coating compositions of the present invention is to first prepare the film forming emulsion copolymer or interpolymer. The methods for polymerizing the copolymer or interpolymer are well known to those skilled in the art. After the emulsion has been prepared, the release agent is then added thereto and the emulsion and release agent are mixed until the solution is homogeneous. While this is the preferred method of preparing the compositions of the present invention, other methods known in the art may be suitable including that of adding the release agent before or during the polymerization of the components making up the emulsion polymer in accordance with methods known in the art.

The amount of reactive release agent added to the emulsion copolymer or interpolymer preferably should not exceed the combining ability of the emulsion copolymer or interpolymer and can be less than an amount equivalent to the carboxyl or amine functional group content of the emulsion copolymer or interpolymer. Otherwise, excess release agent, or the amount of release agent not chemically bound by the carboxyl or amine groups of the emulsion copolymer or interpolymer, can migrate from the release coating and contaminate the adhesive. Thus, it is preferred that the release agent be present in the release coating compositions of the invention in an amount from about .2 to 20% of the weight of the emulsion copolymer or interpolymer but not to exceed the combining ability of the carboxyl or amine functional group of the acid monomer or compounds containing an amine function group making up the emulsion copolymer or interpolymer.

The inverse of the foregoing, an amount of carboxyl or amine functional group in the emulsion copolymer or interpolymer in excess of that needed to react with and exhaust the reactive functionality of the release agent in the creation of an amine-acid or other bonding interaction, is not detrimental to the proper functioning of the release coating compositions of the invention. In fact, controlled release properties can be achieved by varying the amount of the release agent which is added to the emulsion polymer over time with a view towards not adding an amount which exceeds the combining power of the carboxyl or other functional group of the emulsion polymer.

By permitting the reaction of the functional release agent with the emulsion polymer during or after the drying and/or curing of the emulsion copolymer or interpolymer, the release agent migrates to the surface of the release coating composition where it is needed. Thus, when the emulsion copolymer or interpolymer is coated on a suitable substrate and dried and/or cured in the presence of the release agent, the mobile release agent migrates to the surface of the coating composition but is incapable of migrating from the coating composition to a subsequently applied adhesive because of the chemical bonding that occurs with the emulsion polymer.

In another embodiment of the invention, the emulsion copolymer or interpolymer comprises the copolymerization product of the non-functional copolymerizable monomer and, in place of the carboxyl or other functional group acid monomer compound, a compound containing pendant amino groups such as the aminoacrylates, of which t--butylamino-ethyl acrylate and N,N-dimethylaminoethyl--acrylate are exemplary. In this case, the release agents possess an acid functionality and preferred release agents to be used in this connection are the fatty acid compounds of structures I and II below

$$C_nH_{2n+1}\ COOH$$

I

$$\begin{array}{l} C_nH_{2n+1} - CH\ --COOH \\ \qquad\qquad\quad\ | \\ \qquad\qquad\quad CH_2\ --\ COOH \end{array}$$

II

wherein n is an integer from 10 to 20. Thus, the invention is not restricted to a reactive amine functionality in the release agent and a reactive acid functionality in the emulsion. With the exception of the fatty epoxide embodiment in which the fatty epoxide reacts with an acid or an amine functionality in the emulsion copolymer or interpolymer, there should be a reactive amine functionality and a reactive acid functionality in the release coating composition. The source of each of the acid and amine functionality, therefore, is not critical to the proper functioning of the invention.

The following examples illustrate the invention but are not to be construed as limiting.

Example 1

Preparation of a Release Coating Composition and Utility On Pressure Sensitive Adhesive Tape

A 55% solids emulsion polymer was prepared in the conventional manner from a monomer mixture consisting of 99.1% vinyl acetate and 0.9% methacrylic acid.

To 100 parts of the emulsion were added 5 parts of a dispersion consisting of 40% Ethoduomeen T/20 (a commercial PEG-10 tallowaminopropylamine from Armak Industrial Chemicals), 40% water and 20% of Igepol CO-897 (an ethoxylated nonyl-phenyl containing approximately 40 moles of ethyleneoxide manufactured by the GAF Corporation). The ingredients were thoroughly mixed until homogeneous. Portions of the resulting composition I and three especially designed controls A, B and C were coated on the smooth sides of a creped paper stock commonly used as the base for self-wound pressure sensitive-tapes. The release properties of these coated papers were measured by the methods described below.

Control A consisted solely of the above-described vinyl acetate/methacrylic acid copolymer latex. Control B consisted of a vinyl acetate homopolymer. Control C consisted of a blend of 100 parts of the above-mentioned vinyl acetate homopolymer, 1 part of Igepal CO-897, 2 parts of Ethoduomeen T/20 and 2 parts of water.

The tests were conducted as follows: A layer of the above-described composition I and layers of the above described controls were each applied to the smooth sides of creped paper stock with an O Mayer rod. All applications were made in such a manner so as to yield dry coating weights equivalent to about 5 pounds per 3000 square feet. The coated samples were then dried for 15 seconds at 380°F.

The unwind adhesion properties of the dried composition I sample and the three dried control composition samples were determined by first applying 6 inch by 1 inch strips of a Kraton rubber-based masking tape onto the smooth sides of the above-described coated samples. Each strip was rolled 10 times in each direction with a 4.5 lb. rubber covered roller. Each 6 inch by 1 inch sample was then placed under a 6 inch by 1 inch metal bar weighing 1.7 lbs. and heated for 10 minutes at 180°F. After this period of heating, each sample was allowed to equilibrate at 70°F. and 65% relative humidity. The strip of masking tape was mechanically delaminated at a uniform rate of 12 inches per minute by means of an Instron Testing Machine from the paper coated with the release composition. The Instron measured the force required to remove the tape from the release paper. The results of this initial unwind adhesion test are reported in ounces per one inch width - (oz./in.). Aged unwind adhesions were measured in a similar manner after the test specimens had been placed under the 1.7 lb. bar described above and stored in an oven at 150°F. and 70% relative humidity for 72 hours.

The 180° peel adhesions of the test specimens were determined by the PSTC-1 procedure of the Pressure Sensitive Tape Council. The initial and aged 6 inch by 1 inch specimens were prepared and conditioned as described above. Each strip of masking tape was peeled from the release paper and applied to a polished stainless steel plate, then rolled with a 4.5 lb. rubber covered roller. After 20 minutes dwell on the plate, the tape was peeled with the Instron Testing Machine at a uniform rate of 12 inches per minute. Results were reported in ounces per inch width.

The rolling ball tack of each specimen was determined using the PSTC-6 test procedure of the Pressure Sensitive Tape Council. The initial and aged specimens were prepared and conditioned as described in the procedure for unwind adhesion testing. Each strip of masking tape was peeled from the release paper and measured for rolling ball tack. Using the PSTC test apparatus, a stainless steel ball was rolled down an inclined plane onto the adhesive surface. The distance from the base of the incline to the stopping point of the ball was measured in centimeters - (cm.). An average of the stopping distances is reported, after making 5 measurements on fresh areas of the tape.

In order to simulate the tensions within a roll of tape, a pressure unwind adhesion test was also employed. The initial and aged specimens were prepared and conditioned as described above in the procedure for unwind adhesion testing. Each 6 inch by 1 inch specimen was placed in a Carver press with platens heated to 150°F. A pressure of 5000 lbs. was applied to the specimen for 20 minutes. After conditioning at 70°F. and 65% relative humidity, each strip of tape was peeled from the release paper as described in the above procedure for unwind adhesion. Results are reported in ounces per inch width.

The results of these tests appear below in Table No.1:

TABLE NO.1

| Material Tested | Unwind Adhesion Init. (oz./in.) | Unwind Adhesion Aged (oz./in.) | 180° Peel Adhesion Init. (oz.in.) | 180° Peel Adhesion Aged (oz.in.) | Rolling Ball Init. (in.) | Rolling Ball Aged (in.) | Pressure Unwind Init. (oz./in.) | Pressure Unwind Aged (oz./in.) |
|---|---|---|---|---|---|---|---|---|
| Sample 1 | 2.1 | 6.2 | 23.8 | 15.2 | 3.3 | 2.6 | 2.8 | 15.5 |
| Control A | 7.1 | 16.2 | 36.5 | 30.3 | 1.7 | 0.8 | 18.9 | 28.1 |
| Control B | 6.0 | 10.1 | 33.0 | 19.1 | 3.1 | 2.7 | 14.5 | 55.6 |
| Control C | 6.8 | 15.1 | 30.7 | 23.0 | 12+ | 8.1 | 21.4 | 35.8 |
| Commercial Tape | 5.5 | 9.2 | 18.6 | 17.9 | 0.4 | 1.1 | 21.7 | 20.9 |

The data appearing in Table 1 indicates that satisfactory release properties are obtained only when the release agent has been immobilized by reaction with a polymer having acid fuctionality. Control A, the vinyl acetate/methacrylic acid copolymer, and Control B, the vinyl acetate homopolymer, reflect the absence of the ethoxylated fatty diamine release agent by giving unsatisfactory high values for unwind adhesion and pressure unwind adhesion. In Control C, the release agent is present but the vinyl acetate homopolymer is not capable of reacting with it for immobilization. The high values for rolling back tack are indicative of migration of the release agent to the adhesive, with such contamination resulting in reduced tack.

Example II

Amino functional silicone polymer and a vinyl acetate/methacrylic acid (99.1/0.9) copolymer.

The above-described composition was prepared by mixing 100 parts of the vinyl acetate/methacrylic acid copolymer latex, 0.5 parts of DC-108 Emulsion (a commercial amino functional silicone polymer emulsion from Dow Corning Corporation) and 0.5 parts of water. After mixing until homogeneous, the composition was applied and evaluated per the procedures of Example I. The results of this sample composition II appear in Table No.2 below.

TABLE NO.2

| Material Tested | Unwind Adhesion Init. | Unwind Adhesion Aged | 180° Peel Adhesion Init. | 180° Peel Adhesion Aged | Rolling Ball Init. | Rolling Ball Aged | Pressure Unwind Init. | Pressure Unwind Aged |
|---|---|---|---|---|---|---|---|---|
| Sample II | 6.0 | 10.6 | 30.0 | 23.7 | 2.5 | 3.4 | 14.9 | 20.2 |

The above data indicate the utility of composition II as a release coating.

Examples III-IV

Amino fuctional silicone polymer and compolymers of vinyl acetate and alpha-unsaturated dicarboxylic acids.

Composition III was prepared by combining 100 parts of a vinyl acetate/maleic acid (99.4/0.6) copolymer latex, 0.5 parts DC-108 Emulsion and 0.5 parts water. Composition IV was prepared by combining 100 parts of a vinyl acetate/fumaric acid (99.4/06) copolymer latex 0.5 parts DC-108 emulsion and 0.5 parts water. These compositions, along with Control D, consisting solely of the above-described vinyl acetate/maleic acid copolymer, were coated and evaluated in accordance with the procedures of Example I. Results appear in Table No.3 below:

TABLE NO.3

| Material | Unwind Adhesion | | 180° Peel Adhesion | | Rolling Ball | | Pressure Unwind | |
|---|---|---|---|---|---|---|---|---|
| Tested | Init. (oz./in.) | Aged | Init. (oz.in.) | Aged | Init. (in.) | Aged | Init. (oz./in.) | Aged |
| Sample III | 7.6 | 10.0 | 34.0 | 25.0 | 2.4 | 0.9 | 14.8 | 20.6 |
| Sample IV | 6.7 | 8.7 | 33.3 | 27.2 | 3.2 | 1.4 | 14.9 | 19.6 |
| Control D | 8.9 | 17.8 | 28.7 | 32.8 | 1.9 | 0.5 | 20.2 | 28.6 |

The lower unwind and pressure unwind adhesions for samples III and IV relative to that for Control D indicate their usefulness as release coatings. The low distances reported for rolling ball indicate that the release agent was immobilized and did not migrate to the adhesive.

Example V

Amino functional silicone polymer and copolymer of vinyl acetate and acrylic monomer with sulfonic acid funtionality.

Composition V was prepared by combining 100 parts of a vinyl acetate/2-acrylamide-2-methylpropanesulfonic acid (97.8/2.2) copolymer latex, 0.5 parts DC-108 Emulsion and 0.5 parts water. This composition was coated and evaluated in accordance with the procedure of Example I. Results appear in Table No.4 below:

TABLE NO.4

| Material | Unwind Adhesion | | 180° Peel Adhesion | | Rolling Ball | | Pressure Unwind | |
|---|---|---|---|---|---|---|---|---|
| Tested | Init. (oz./in.) | Aged | Init. (oz.in.) | Aged | Init. (in.) | Aged | Init. (oz./in.) | Aged |
| Sample V | 7.2 | 8.9 | 35.0 | 23.5 | 3.3 | 3.0 | 17.1 | 22.0 |

The data of Table No 4 illustrate Composition V's effectiveness as a release formulation for a typical masking tape adhesive.

While there have been described what are presently believed to be preferred embodiments of the invention, it will be apparent to a person skilled in the art that numerous changes can be made in the ingredients, conditions and proportions set forth in the foregoing embodiments without departing from the invention as described herein and as defined in the appended claims.

**Claims**

1. An aqueous based release coating composition comprising an emulsion copolymer or interpolymer which contains an amine or acid functional group and a release agent which is capable of reacting and forming a bond with the emulsion copolymer or interpolymer such that, once the bond is formed, the release agent is prevented from migrating and contaminating an adhesive surface.

2. A composition as claimed in claim 1, wherein the emulsion copolymer or interpolymer comprises the reaction product of a non-functional copolymerizable monomer and a functional copolymerizable monomer which contains an amine or acid functional group.

3. A composition as claimed in claim 2 wherein the acid is an alpha-unsaturated mono- or dicarboxylic acid derivative or a mixture thereof; the amine is an aminoacrylate; and the release agent is a fatty amine, fatty diamine, amine functional silicone, blocked isocyanate, polydimethyl siloxane polymer or a fatty epoxide.

4. An aqueous based release coating composition comprising an emulsion copolymer or interpolymer which is capable of bonding to a release agent by an amine-acid bonding interaction such that, once the bond is formed, the release agent is prevented from migrating and contaminating an adhesive surface.

5. An aqueous based release coating composition comprising an emulsion copolymer or interpolymer of an acid monomer containing an acid functional group and a non--functional copolymerizable monomer, and a release agent containing an amine functional group which is capable of reacting and forming a bond with the acid functional group of the emulsion copolymer or interpolymer such that, once the bond is formed, the release agent is prevented from migrating and contaminating an adhesive surface.

6. A composition as claimed in claim 5 wherein the emulsion copolymer or interpolymer comprises 0.2-20% parts by weight of the acid monomer and 80-99.8% parts by weight of the non-functional copolymerizable monomer and the amount of release agent in the composition is not in excess of the amount which is required to react with the functional groups of the emulsion copolymer or interpolymer.

7. A composition as claimed in claim 5 or claim 6 wherein the non-functional copolymerizable monomer is vinyl acetate, vinyl chloride, vinylidene chloride, styrene, an alkyl acrylate or a mixture of two or more thereof.

8. A composition as claimed in any one of claims 5 to 7 wherein the acid monomer is selected from:

a) 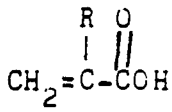

wherein R is hydrogen or a lower alkyl group $C_nH_{2n+1}$ and n is an integer of from 1 to 4

b) 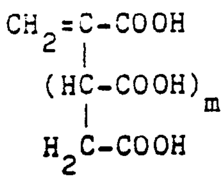

wherein m is 0 or an integer of 1 to 2

c) 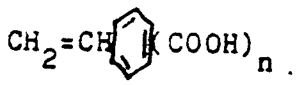 wherein n is an integer of from 1 to 3

d) 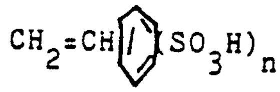 wherein n is an integer of from 1 to 3

e) $CH_2=CHSO_3H$

f) 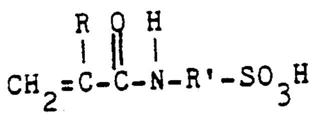 wherein R is hydrogen or a lower alkyl group $C_nH_{2n+1}$ and n is an integer of from 1 to 4 and R' is an alkylene group or

g) 2-butenoic acid, maleic acid or fumaric acid.

9. A composition as claimed in any one of claims 5 to 8 wherein the release agent is selected from:

a) $C_nH_{2n+1}NR_2$ or $C_nH_{2n-1}NR_2$ wherein n is an integer of from 8 to 20 and R is a lower alkyl, hydrogen or $(CH_2CR'HO)_mH$ wherein m is an integer of from 1 to 15 and R' is hydrogen or a methyl group.

b) 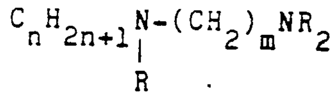 or

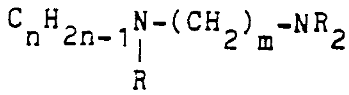

wherein n is an integer of from 10 to 20, m is 2 or 3 and R is hydrogen, lower alkyl or polyalkoxy of the formula 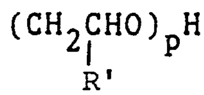 wherein R' is hydrogen or methyl and p is an integer of from 1 to 15.

c) 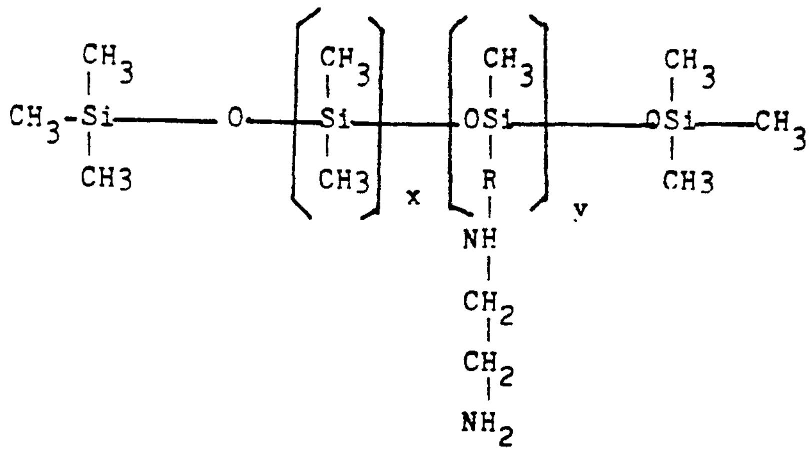

wherein x and y are integers.

d) 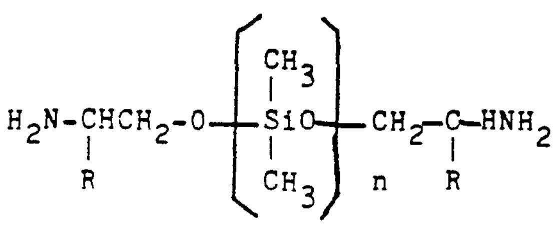

wherein R is hydrogen or a lower alkyl group and n is an integer of from 10 to 100.

e) 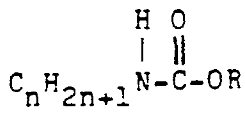

wherein the product is derived from a fatty isocyanate ($C_nH_{2n+1}NCO$) and a blocking agent ROH such as a phenol or a ketoxime, and n is an integer of from 10 to 20.

f) 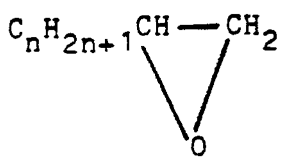

wherein n is an integer of from 8 to 18.

10. A composition as claimed in any one of claims 5 to 9 wherein the emulsion copolymer or interpolymer contains 80-99.8% parts by weight vinyl acetate and 0.2 to 20% parts polyethoxylated (10) tallow aminopropylamine.

11. A composition as claimed in any one of claims 5 to 9 wherein the emulsion copolymer or interpolymer contains 80-99.8% parts by weight vinyl acetate and 0.2 to 20% parts by weight fumaric acid or 2-acrylamido-2--methylpropane sulfonic acid and the release agent is an amino-functional emulsion.

12. An aqueous based release coating composition comprising an emulsion copolymer or interpolymer of a reactive amine-functional compound and a non-functional copolymerizable monomer and a release agent possessing an acid functional group which is capable of reacting with and bonding with the emulsion by means of an amine-acid bonding interaction such that, one the bond is formed, the release agent is prevented from migrating and contaminating an adhesive surface.

13. A composition as claimed in claim 12 wherein the reactive amine-functional compound is an aminoacrylate and the release agent is a fatty acid.

14. A process for the preparation of release coating compositions comprising the steps of:

a) polymerizing an acid monomer and a non-functional copolymerizable monomer to form an emulsion copolymer or interpolymer containing a reactive functional group capable of making up part of an amine-acid bonding interaction;

b) mixing the emulsion with a release agent capable of forming an amine-acid bonding interaction with the functional group;

c) mixing until homogeneity is achieved;

d) drying and/or curing the resultant composition.

European Patent Office

# EUROPEAN SEARCH REPORT

Application number

EP 86 30 0148

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 029 843 (J.J. SHAH)<br>* Abstract; claims 1,2; column 3, lines 24-29 *<br>--- | 1-5,9 | C 09 D 3/48<br>C 08 F 8/00 |
| A | GB-A-2 011 427 (SONY)<br>* Abstract; claims 2,3; page 10, example 1 * & US - A - 4 241 198 (Cat. D)<br>--- | 1-3,6-8 | |
| A,D | US-A-3 933 702 (R.J. CAIMI)<br>--- | 1 | |
| A | GB-A- 887 387 (R.M. SMITH)<br>----- | | |
| | | | **TECHNICAL FIELDS SEARCHED (Int. Cl.4)** |
| | | | C 09 D<br>C 08 F<br>C 09 J 7<br>C 08 G<br>B 05 D |

The present search report has been drawn up for all claims

| Place of search | Date of completion of the search | Examiner |
|---|---|---|
| THE HAGUE | 18-04-1986 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document